# EUROPÄISCHE PATENTSCHRIFT

(11) **EP 0 605 794 B1**
(45) Veröffentlichungstag und Bekanntmachung des Hinweises auf die Patenterteilung: **22.07.1998**
(21) Anmeldenummer: 93119417.9
(22) Anmeldetag: 02.12.1993
(51) Int. Cl.: B07C 5/02, B65G 47/256

(54) **Verfahren zur Vereinzelung von Objekten eines Objektgemisches und Vorrichtung zur Durchführung des Verfahrens**
Method for singulating objects from an object mixture and device for implementing this method
Procédé de séparation individuelle d'objets d'un mélange d'objets et dispositif pour la mise en oeuvre de ce procédé

(30) Priorität: 08.12.1992 DE 4241262
(43) Veröffentlichungstag der Anmeldung: 13.07.1994
(73) Patentinhaber: RWE Entsorgung Aktiengesellschaft, 45128 Essen (DE)
(72) Erfinder: Wintrich, Franz Dipl.-Ing, D-45309 Essen (DE); Kaiser, Dieter Dipl.-Ing, D-44357 Dortmund (DE)

(56) Entgegenhaltungen:
- EP-A- 0 395 855
- DE-A- 3 002 239
- DE-U- 8 904 443
- FR-A- 2 666 315
- GB-A- 761 553

## Beschreibung

Die vorliegende Erfindung betrifft ein Verfahren zur Vereinzelung von Objekten aus Objektgemischen und eine Vorrichtung zur Durchführung des Verfahrens, wobei das Objektgemisch auf eine Rüttelvorrichtung aufgebracht wird, auf der das Objektgemisch, gesteuert von Sensoren, unter gleichzeitiger Vereinzelung der Objekte in Richtung zu einer Fördervorrichtung bewegt wird, welche die vereinzelten Objekte voneinander getrennt aufnimmt, wobei bei zur getrennten Aufnahme auf der Fördervorrichtung nicht ausreichender Vereinzelung auf der Rüttelvorrichtung die nicht ausreichend vereinzelten Objekte, ebenfalls durch Steuerung mit Sensoren, einer weiteren Förderrichtung zugeführt werden, die eine Rückführung der Objekte auf die Rüttelvorrichtung ermöglicht.

Trennen und Sortieren spielen in Industrie, Gewerbe und Haushalten eine beachtliche Rolle. Noch immer wird hierzu häufig Handarbeit eingesetzt. Es stehen jedoch bereits hochmoderne vollautomatische Trennanlagen zur Verfügung, die aufgrund von Merkmalen wie Größe, Form, Farbe, Schriftzügen, Firmenkennzeichen und dergleichen, bestimmte Objekte identifizieren und Sortiereinrichtungen in Gang setzen, um die identifizierten Objekte auszusortieren. Ein bekanntes Beispiel ist in der Lebensmittelindustrie das Aussortieren minderwertiger Produkte, wie z. B. bei der Abpackung von Kaffeebohnen und sonstigen Lebens- und Genußmitteln.

Entwicklungen dieser Art sind auch im Bereich der Rückgewinnung wertvoller Bestandteile aus Abfällen bekannt.

So macht man sich gemäß DE-OS 40 18 757 die unterschiedliche Wärmeaufnahme von elektrisch leitenden und nicht leitenden Abfallmaterialien zunutze, um eine Sortierung der Materialien vornehmen zu können. Hierzu werden die auf einem Förderband vereinzelten Gemischbestandteile mit Infrarotstrahlung bestrahlt, durch Wärmesensoren die unterschiedliche Wärmeabstrahlung gemessen und über Signale aus der Sensoranlage eine Sortiereinrichtung in Gang gesetzt.

In der DE-OS 40 21 882 wird ein Verfahren zum Erkennen unterschiedlicher Kunststoffe beschrieben, indem man ein Gemenge unterschiedlicher Kunststoffe, wie es beispielsweise in Abfällen vorliegt, mit Mikrowellen bestrahlt und auch hier die unterschiedliche Wärmeabstrahlung zur Betätigung einer Sortiereinrichtung nutzt. Zur Erfassung der Wärmeabstrahlung wird vorzugsweise ein Pyrometer verwendet.

In der DE-OS 42 12 713 wird ein System für die Wiederverwertung von Behältern offenbart, in dem die Erkennungsstation auch Oberflächenmuster erfaßt und zur Identifizierung auswertet. Auf Seite 2 der Beschreibung ist erläutert, daß die charakteristischen Muster wie Rautenmuster, Noppenmuster und Rillen auf den Behältern durch Profilierung schon bei der Herstellung aufgebracht werden.

In der DE-OS 41 25 045 wird ein Verfahren zum Sortieren von Abfallgemischen offenbart, durch Bestrahlen der Abfallobjekte mit elektromagnetischen und/oder akustischen Wellen, Aufnahme der von den bestrahlten Abfallobjekten ankommenden Wellen in einer Signalverarbeitungsvornchtung zur Identifizierung der Abfallobjekte durch Bilderzeugung und Weiterleiten von Signalen aus der Signalverarbeitungsvorrichtung zu einer Sortiervorrichtung, die das identifizierte Abfallobjekt aussortiert. Die Signalverarbeitungsvorrichtung erfaßt Merkmale wie äußere Form des Objekts, wie z. B. Flaschen-, Becher-, Tubenformen, kubische und andere Formen sowie Schriftzüge, Produktnamen, Firmen- bzw. Herstellernamen, Warenzeichen und Farben.

In der EP-A-0395 855 sind ein Verfahren und eine Vorrichtung zum Verteilen von Kleinteilen, wie Glasbruchstücken offenbart. Hierbei wird ein großer Zufuhrstrom über einen vibrierbaren Zufuhrkanal in mehrere über abzweigende Förderkanäle fließende Förderströme aufgeteilt. Die Steuerung erfolgt mittels Sensoren. Auch eine Rückführung von Fördergut ist möglich.

Eine sehr wesentliche Voraussetzung für eine wirkungsvolle Sortierung ist die sogenannte Vereinzelung einzelner Objekte aus Objektgemischen, da eine einwandfreie Erkennung einzelner Objekte nur dann zuverlässig durchführbar ist, wenn sich das zu identifizierende Objekt in ausreichendem Abstand von anderen Objekten befindet.

Die übliche Vereinzelung bei automatischen Sortieranlagen besteht aus der Aufgabe des Objektgemischs auf ein Förderband mit einer bestimmten Aufgabegeschwindigkeit. Die Erfahrung lehrt jedoch, daß bei dieser Technik ein erheblicher Anteil der Objekte nicht ausreichend voneinander getrennt werden.

Es bestand daher für den Fachmann nach wie vor die Aufgabe, die Vereinzelung von Objekten zu verbessern, so daß insbesondere eine zuverlässige Aussortierung der einzelnen Objekte möglich wird.

Die ist der Anmelderin der vorliegenden Erfindung mit einem Verfahren zur Verteilung von Objekten aus Objektgemischen gelungen, wobei das Objektgemisch auf eine Rüttelvorrichtung aufgebracht wird, auf der das Objektgemisch unter gleichzeitiger Verteilung der Objekte in Richtung zu Fördervorrichtungen bewegt wird und die Verteilung durch Sensoren gesteuert wird, wobei eine Rückführung von Objekten möglich ist, dadurch gekennzeichnet, daß durch die Rüttelvorrichtung die Objekte zumindest teilweise vereinzelt werden, daß die gewünschte Vereinzelung durch Sensoren erfaßt wird, daß die vereinzelten Objekte getrennt voneinander auf eine Fördervorrichtung gelangen und daß die Objekte bei zur getrennten Förderung nicht ausreichender Vereinzelung ebenfalls durch Sensoren erfaßt werden und die nicht ausreichend getrennten Objekte einer weiteren Fördervorrichtung zugeführt werden, die eine Rückführung dieser Objekte auf die Rüttelvorrichtung ermöglicht.

Die Erfindung betrifft ferner eine Vorrichtung nach den Ansprüchen 9 bis 13 zur Durchführung des Verfahrens und Verwendung von Verfahren und Vorrichtung zur Vereinzelung von Objekten aus Objektgemischen.

Erfindungsgemäß hat die Rüttelvorrichtung sowohl die Funktion der Vereinzelung der einzelnen Objekte als auch die Funktion der Förderung der Objekte in Richtung zu einer Fördervorrichtung. Von der Rüttelvorrichtung gelangen ausreichend vereinzelte Objekte auf die Fördervorrichtung, wo sie getrennt voneinander aufgenommen werden. Von der Fördervorrichtung können die vereinzelten Objekte Sammelvorrichtungen zugeführt werden, in denen die untereinander gleichen bzw. im gewünschten Umfang gleichen Objekte gesammelt werden. Objekte, die auf der Rüttelvorrichtung nicht so weit vereinzelt werden, daß sie auf der Fördervorrichtung getrennt aufgenommen werden können, gelangen über eine weitere Fördervorrichtung wieder zurück zur Rüttelvorrichtung.

Erfindungemäßes Verfahren und die Vorrichtung zur Durchführung desselben eignen sich insbesondere zum Vereinzeln von Objekten aus Abfallgemischen.

Die Erfindung schließt bevorzugt auch das getrennte Sammeln der vereinzelten Objekte ein, indem die von der Fördervorrichtung getrennt bzw. vereinzelt aufgenommenen Objekte in Abhängigkeit von ihren Eigenschaften in hierfür vorgesehene Sammelvorrichtungen gefördert werden.

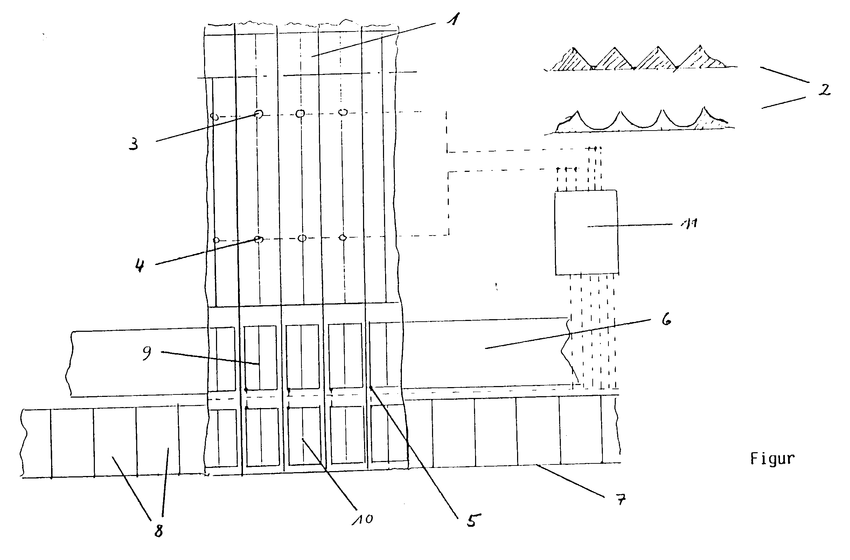

In der Figur ist beispielhaft eine erfindungsgemäße Vorrichtung dargestellt.

Bevorzugt ist die Fläche der Rüttelvorrichtung rillenförmig ausgebildet, wobei die Rillen in Richtung der Förderrichtung verlaufen. Es kann sich hierbei um einzelne aber auch um mehrere Rillen handeln, bis zur vollständigen Ausfüllung der Oberfläche der Rüttelvorrichtung mit Rillen. Seitlich und/oder oberhalb der Rüttelvorrichtung und Fördervorrichtungen und an sonstigen zur Steuerung vorgesehenen Punkten sind Sensoren angebracht, welche auf der Rüttelvorrichtung ausreichend vereinzelte Objekte der hierfür vorgesehenen Fördervorrichtung zuleiten und die Aufgabe der Objekte auf diese Fördervorrichtung in der Weise steuern, daß eine getrennte Aufnahme auf derselben in hierfür vorgesehenen Wannen, Behältern, Vertiefungen oder dergleichen erfolgt. Von der Fördervorrichtung können die getrennt gesammelten Objekte schließlich ebenfalls vorzugsweise sensorgesteuert an eine Sammelvorrichtung abgegeben werden, in der gleiche Objekte bzw. im gewünschten Umfang gleiche Objekte zu größeren Mengen gesammelt werden. Die in oder über der Rüttelvorrichtung angebrachten Sensoren haben die weitere Funktion, daß sie nicht ausreichend vereinzelte Objekte auf eine weitere Fördervorrichtung lenken, die dazu dient, diese Objekte wieder zur Rüttelvorrichtung zurückzuführen.

Rüttelvorrichtung und Fördervorrichtungen können zueinander senkrecht angeordnet sein, sie können jedoch auch in der Weise angeordnet sein, daß Rüttelvorrichtung und weitere Fördervorrichtungen in der gleichen Richtung untereinander angeordnet verlaufen.

Erfindungsgemäß von Bedeutung ist, daß Rüttelbewegung, Fördergeschwindigkeit auf der Rüttelvorrichtung und Fördergeschwindigkeit der Fördervorrichtung so aufeinander abgestimmt sind, daß eine maximale Anzahl an vereinzelten Objekten abgetrennt bzw. aussortiert werden kann.

Die Erfindung soll mit Hilfe der Figur näher erläutert werden.

1 ist die mehrere Rillen aufweisende Rüttelvorrichtung von oben betrachtet. 2 stellt Ansichten der Rüttelvorrichtung im Schnitt dar. 3, 4 und 5 stellen Sensoren bzw. ihre Zuleitungen dar. 6 ist ein Förderband zur Rückführung von nicht ausreichend vereinzelten Objekten. 7 stellt ein Förderband zum Transport vereinzelter Objekte dar. 8 sind Aufnahmevorrichtungen für die vereinzelten Objekte. 9 und 10 sind Klappen, nach deren sensorgesteuerten Öffnen Objekte auf die Förderbänder fallen.
11 ist ein Sensorgerät.
Die Figur stellt nur ein Beispiel zahlreicher gleich oder ähnlich wirkender Anordnungen zur erfindungsgemäßen Vereinzelung und Sortierung von Objekten dar. So können beispielsweise die einzelnen Bänder in anderer Weise angeordnet sein. Die Oberfläche von Rüttelvorrichtung und Förderbändern kann unterschiedliche Strukturen aufweisen, der Öffnungsmechanismus der Klappen am Ende der Rüttelvorrichtung kann unterschiedlich konstruiert sein, die Sensoren können in anderer Weise angeordnet sein, usw.
In der Figur mißt beispielsweise Sensor 3 den Zeitpunkt der Ankunft zweier Objekte. Eine zweite Messung erfolgt durch Sensor 4. Ist der Abstand nach Messung 4 zwischen den Objekten zu klein, so wird eine der Klappen 9 über Sensor 5 geöffnet, durch welche das zuerst ankommende, sich auf der zugeordneten Rille befindliche Objekt auf Förderband 6 gelangt, während das verbleibende Einzelobjekt durch die Klapp 10 fällt, welche der das Objekt tragenden Rille zugeordnet ist, auf Förderband 7 gelangt und von einer der Aufnahmevorrichtungen 8 aufgenommen wird.

## Patentansprüche

1. Verfahren zur Verteilung von Objekten aus Objektgemischen, wobei das Objektgemisch auf eine Rüttelvorrichtung aufgebracht wird, auf der das Objektgemisch unter gleichzeitiger Verteilung der Objekte in Richtung zu Fördervorrichtungen bewegt wird und die Verteilung durch Sensoren gesteuert wird, wobei eine Rückführung von Objekten möglich ist, dadurch gekennzeichnet, daß durch die Rüttelvorrichtung die Objekte zumindest teilweise vereinzelt werden, daß die gewünschte Vereinzelung durch Sensoren erfaßt wird, daß die vereinzelten Objekte getrennt voneinander auf eine Fördervorrichtung gelangen und daß die Objekte bei zur getrennten Förderung nicht ausreichender Vereinzelung ebenfalls durch Sensoren erfaßt werden und die nicht ausreichend getrennten Objekte einer weiteren Fördervorrichtung zugeführt werden, die eine Rückführung dieser Objekte auf die Rüttelvorrichtung ermöglicht.

2. Verfahren nach Anspruch 1, dadurch gekennzeichnet, daß die Objekte aus einem Abfallgemisch vereinzelt werden.

3. Verfahren nach wenigstens einem der Ansprüche 1 und 2, dadurch gekennzeichnet, daß eine Rüttelvorrichtung mit rillenartigen Strukturen eingesetzt wird, wobei die Rillen in Richtung zu der Fördervorrichtung verlaufen.

4. Verfahren nach wenigstens einem der Ansprüche 1 bis 3, dadurch gekennzeichnet, daß eine Rüttelvorrichtung eingesetzt wird, deren gesamte Fläche mit rillenartigen Strukturen ausgebildet ist.

5. Verfahren nach wenigstens einem der Ansprüche 1 bis 4, dadurch gekennzeichnet, daß eine Fördervorrichtung eingesetzt wird, die senkrecht zur Rüttelvorrichtung angeordnet ist.

6. Verfahren nach wenigstens einem der Ansprüche 1 bis 5, dadurch gekennzeichnet, daß eine Überführung der vereinzelten Objekte in Sammelvorrichtungen durch Klappen erfolgt.

7. Verfahren nach wenigstens einem der Ansprüche 1 bis 6, dadurch gekennzeichnet, daß Rüttelbewegung und Fördergeschwindigkeit auf der Rüttelvorrichtung und die Fördergeschwindigkeit auf der Fördervorrichtung so aufeinander abgestimmt werden, daß eine maximale Anzahl an vereinzelten Objekten in für diese Objekte vorgesehenen Sammelvorrichtungen gesammelt werden.

8. Verfahren nach wenigstens einem der Ansprüche 1 bis 7, dadurch gekennzeichnet, daß die von der hierfür vorgesehenen Fördervorrichtung getrennt aufgenommenen Objekte in Abhängigkeit von ihren Eigenschaften in hierfür vorgesehene Sammelvorrichtungen gefördert werden.

9. Vorrichtung zur Verteilung von Objekten aus Objektgemischen die eine Rüttelvorrichtung (1) zur Verteilung der Objekte aufweist, Fördervorrichtungen (7) zur Aufnahme der verteilten Objekte, Sensoren (3,4,5) zur Steuerung der Verteilung sowie eine Rückführeinrichtung (6), dadurch gekennzeichnet, daß eine Rüttelvorrichtung (1) vorliegt mit Sensoren (3,4), welche die Vereinzelung der Objekte erfassen, eine Fördervorrichtung (7) zur Aufnahme der vereinzelten Objekte sowie eine weitere Fördervorrichtung (6) mit Sensoren (5) zur Rückführung nicht ausreichend vereinzelter Objekte auf die Rüttelvorrichtung (1).

10. Vorrichtung nach Anspruch 9, dadurch gekennzeichnet, daß die Rüttelvorrichtung (1) rillenartige Strukturen aufweist, die in Richtung der Fördervorrichtung verlaufen.

11. Vorrichtung nach wenigstens einem der Ansprüche 9 und 10, dadurch gekennzeichnet, daß die gesamte Flache der Rüttelvorrichtung (1) rillenartige Strukturen aufweist.

12. Vorrichtung nach wenigstens einem der Ansprüche 9 bis 11, dadurch gekennzeichnet, daß diese Sammelbehälter (8) aufweist, in denen die von der Fördervorrichtung (7) getrennt aufgenommenen Objekte in Abhängigkeit von ihren Eigenschaften gesammelt werden.

13. Vorrichtung nach wenigstens einem der Ansprüche 9 bis 12, dadurch gekennzeichnet, daß die Fördervorrichtungen (6,7) quer zur Rüttelvorrichtung angeordnet sind.

14. Verwendung des Verfahrens nach den Ansprüchen 1 bis 8 zur Vereinzelung von Objekten aus Objektgemischen.

15. Verwendung der Vorrichtung nach den Ansprüchen 9 bis 13 zur Vereinzelung von Objekten aus Objektgemischen.

## Claims

1. Process for the distribution of objects of object mixtures, whereby the object mixture is put on a vibrating device, on which the object mixture is moved in the direction to conveying devices with simultaneous distribution of the objects whereby the distribution is controlled by sensors, whereby recycling of objects is possible, characterized in that the objects are at least partially separated from each other, in that the separation desired , is detected by sensors, in that the individual objects separated from each other, arrive at a individual conveying device and in that the objects in case that they are for the purpose of separate conveyance not sufficiently separated from each other, are detected by sensors as well and in that the objects, which are not sufficiently separated from each other, are fed to a further conveying device which permits recycling of the objects to the vibrating device.

2. Process according to claim 1, characterized in that objects of a waste mixture are separated from each other.

3. Process according to claims 1 an 2,, characterized in that a vibrating device is used with grooved structures, whereby the grooves extend in the direction of the conveying device.

4. Process according to claims 1 to 3, characterized in that a vibrating device is used, the total surface of which exhibits groove-like structures.

5. Process according to claims 1 to 4, characterized in that a conveying device is used, which is arranged perpendicular to the vibrating device.

6. Process according to claims 1 to 5, characterized in that transfer of the individual objects into collecting devices takes place through flaps.

7. Process according to claims 1 to 6, characterized in that vibrating movement and conveying rate on the vibrating device are adjusted to the conveying rate on the conveying device in such a way in that a maximum number of separate objects are collected in collecting devices intended for these objects.

8. Process according to claims 1 to 7, characterized in that by the designated conveying device separately received objects are conveyed, depending on their properties, into intended collecting devices.

9. Device for the distribution of objects of object mixtures, which exhibits a vibrating device (1) for the distribution of the objects, conveying devices (7) for the reception of the distributed objects, sensors (3,4,5) for controlling the distribution, as well as a recycling device, characterized in that a vibrating device (1) with sensors (3,4) is present, which detects the extent of separation of the objects from each other, a conveying device (7) for the reception of the objects separated from each other as well as an additional conveying device (6) with sensors (5)for recycling the objects not sufficiently separated from each other, to the vibrating device.

10. Device according to claim 9, characterized in that the vibrating device (1) exhibits groove - like structures, which extend in the direction of the conveying device.

11. Device according to claims 9 and 10, characterized in that the total surface of the vibrating device (1) exhibits groove-like structures.

12. Device according to claims 9 to 11, characterized in that it is equipped with collecting containers (8), within which the objects, which are separately received by the conveying device (7) are collected depending on their properties.

13. Device according to claims 9 to 12, characterized in that the conveying devices (6, 7) are arranged perpendicular to the vibrating device.

14. Use of process according to claims 1 to 8, for the separation of the objects of an object-mixture from each other.

15. Use of the device according to claims 9 to 13 for the separation of objects of object mixtures from each other.

## Revendications

1. Un procédé pour la distribution des objets d'un mélange des objets à l'occasion de quoi le mélange des objets est mis sur un dispositif vibrant sur lequel le mélange des objets est mut dans la direction aux dispositifs de transport avec la distribution simultanée des objets et la distribution est contrôlée par des détecteurs, à l'occasion de quoi un recyclage est possible, caractérisé en ce que par le dispositif vibrant les objets sont au moins partiellement séparés l'un de l'autre, en ce que la séparation souhaitée est détectée par des détecteurs, en ce que le objets séparés l'un de l'autre parviennent sur un dispositif de transport et en ce que les objets sont aussi détectés par des détecteurs dans le cas que les objets ne sont pas séparés suffisants l'un de l'autre pour le transport séparé et en ce que les objets ne pas séparés suffisants l'un de l'autre sont amenés a un dispositif de transport additionnel, quel permit le recyclage de ces objets au dispositif vibrant.

2. Un procédé selon la revendication 1 caractérisé en ce que les objets d'un mélange des déchets sont séparés l'un de l'autre.

3. Un procédé selon les revendications 1 et 2 , caractérisé en ce que un dispositif vibrant est usé avec des structures rainures, à l'occasion de quoi les rainures sont disposées dans la direction au dispositif de transport.

4. Un procédé selon les revendications 1 à 3, caractérisé en ce que un dispositif vibrant est usé, la surface totale de laquelle est équipée avec des structures rainures.

5. Un procédé selon les revendications 1 à 4, caractérisé en ce que un dispositif de transport est usé, quel est arrangé transversal au dispositif vibrant.

6. Un procédé selon les revendications 1 à 5, caractérisé en ce que le transport sur le dispositif de trades objets séparés l'un de l'autre aux réservoirs de stockage a lieu par des trappes.

7. Un procédé selon les revendications 1 à 6 , caractérisé en ce que le mouvement vibrant et la vitesse de transport sur le dispositif vibrant et la vitesse de transport sur le dispositif de transport sont accordés de cette facon qu'un nombre maximal des objets séparés l'un de l'autre est accumulé dans des réservoirs de stockage prévus pour ces objets.

8. Un procédé selon les revendications 1 à 7, caractérisé en ce que les objets séparés l'un de l'autre quels sont reçus par des dispositifs de transport prévus pour cela, sont transportés, dépendent de leur propriétés, dans des réservoirs de stockage prévus pour cela.

9. Dispositif pour la distribution des objets d'un mélange des objets, quel présent un dispositif vibrant (1) pour la distribution des objets, des dispositifs de transport (7) pour la réception des objets distribués, détecteurs (3,4,5) pour le contrôle de la distribution ainsi qu'un dispositif pour recyclage, caractérisé en ce qu'un dispositif vibrant (1) est présent avec des détecteurs (3,4), quels détectent la séparation des objets l'un de l'autre, un dispositif de transport (7) pour la réception des objets séparés l'un de l'autre ainsi que des dispositifs (6) de transport additionnelles avec des détecteurs (5) pour le recyclage des objets ne pas séparés l'un de l'autre suffisants sur le dispositif vibrant.

10. Dispositif selon la revendication 9, caractérisé en ce que le dispositif vibrant (1) est équipé avec des structures rainures quelles sont disposées dans la direction du dispositif de transport.

11. Dispositif selon les revendication 9 à 10, caractérisé en ce que la surface totale du dispositif vibrant (1) est équipé avec des structures rainures.

12. Dispositif selon les revendication 9 à 11, caractérisé en ce que celui-ci présent des réservoirs de stockage, dans lesquelles les objets reçu du dispositif (7) de transport et séparés l'un de l'autre sont accumulés, dépendent de leurs propriétés.

13. Dispositif selon les revendications 9 à 12, caractérisé en ce que les dispositifs de transport (6,7) sont arrangés transversal au dispositif vibrant.

14. Usage du procédé selon les revendications 1 à 8, pour la séparation l'un de l'autre des objets des mélange des objets.

15. Usage du dispositif selon les revendication 9 à 13, pour la séparation l'un de l'autre des objets des mélanges des objets.
